# EUROPEAN PATENT APPLICATION

(11) **EP 3 855 842 A1**
(43) Date of publication of application: **28.07.2021**
(21) Application number: 21153887.1
(22) Date of filing: 27.01.2021
(51) Int. Cl.: H04W 72/04, H04W 72/12, H04W 24/02

(54) **METHOD AND APPARATUS FOR DYNAMICALLY ALLOCATING RADIO RESOURCES IN A WIRELESS COMMUNICATION SYSTEM**

(30) Priority: 27.01.2020 US 202062966126 P; 31.12.2020 US 202017138952
(71) Applicant: Sterlite Technologies Limited, Haryana 122002 (IN)
(72) Inventor: PAREKH, Shyam, California, 94563 (US); TANG, Kevin, California, 94568 (US); RAVINDRAN, Ravishankar, California, 94582 (US)
(74) Representative: Hepworth Browne

(57) **Abstract**

A method and apparatus for providing dynamic allocation of radio resources in a wireless communication system (1000) is disclosed. The method includes receiving, by a first controller (300) from a second controller (200), a dynamic spectrums sharing (DSS) policy configuration message, wherein the DSS policy configuration message comprising a resource allocation proportion between a type one network scheduler (600) and a type two network scheduler (700). The method further includes receiving, by the first controller from the type one network scheduler and the type two network scheduler, a plurality of report messages and a plurality of key performance indicators (KPIs). The method further includes assigning, by the first controller (300) to the type one network scheduler (600) and the type two network scheduler (700), a plurality of physical resource blocks (PRBs) based on the DSS policy configuration message, the plurality of report messages and the plurality of KPIs.

## Description

### BACKGROUND OF THE INVENTION

### Field of the Invention.

The present disclosure relates to a wireless communication system, and more specifically, relates to a method and an apparatus for dynamically allocating radio resources in a wireless communication system.

### Description of Prior Art

The increase in demand of the mobile customers for efficient and reliable connectivity (i.e., improved network) is continuously evolving and hence cellular operators (also referred as "mobile network operators (MNOs) encompassing different radio access networks (RATs)) desire to meet the mobile customers demand by ensuring uninterrupted services with quality and efficiency. On the other hand, in order to meet this desire, the cellular operators require a favourable balance among customer experience and satisfaction, network performance, and costs.

One way to improve performance and reduce their capital and operating costs is to share resources/bandwidth between the different RATs. That is, a same RAT is unlikely to use all of its resources all the time. Therefore, there is an opportunity for different RATs operating in a given geographical area to pool in some of their respective resources to achieve greater overall efficiency.

Dynamic spectrum sharing (DSS) has been cited as one of the promising mechanism for managing the radio spectrum for coexisting systems (such as 3G, 4G and 5G). The goal of the DSS is to increase the performance of networks in the shared spectrum, by providing a more efficient way of utilisation, which thereby outperforms fixed spectrum allocation (FSA).

The DSS allows both 4G and 5G RATs to simultaneously operate within the same spectrum. The resources are allocated dynamically between the 4G and 5G technologies based on device distribution and capacity requirements.

However, the DSS operates in either distributed fashion and/or in a centralized approach.

The DSS operating in distributed fashion within individual base stations (BS's) that lacks wider view of the traffic dynamics of multiple cells, and fails to cover or work well with all deployment scenarios (e.g., non-co-located 4G/5G cells, or with UE's moving through multiple cells). That is, in the distributed fashion, the schedulers can estimate the future workload and propose the allocation of the radio resources. In order to avoid large delay during this allocation, one of the Medium access control (MAC) layer can be a master node. But this approach may incur multiple round-trip times (RTT's) and may not be fair. Thus, the actual latency depends on the latency on X2, which in turn depends on the CU/DU deployment scenarios, e.g., edge vs center, co-sited vs non co-sited, etc.

In the centralized approach, a logically centralized function can be realized, that is provided with the expected current and future workload. In this, the logically centralized function decides the bandwidth and bit vector allocation. However, the latency in this approach can be comparable to that of the above distributed approach, depending on the actual CU/DU deployment scenarios.

Also, considering that the DSS is a vendor proprietary and built-in feature of the 4G/5G MAC schedulers at next generation Node-B (gNB)/evolved Node-B (eNB) may lead to interoperability issues for the cellular operators who use the BSs from multiple vendors.

Accordingly, there remains a need for improved methods of dynamic resource sharing that are able to meet the desire of the cellular operators with minimal/no latency and further meeting the radio resource/spectrum requirements of the user equipment (UE) and BSs operated by the cellular operators.

### SUMMARY OF THE INVENTION

The principal object of the present invention is to provide an improved centralized resource allocation-based spectrum sharing between 4G and 5G systems.

Another object of the present invention is to provide dynamic bandwidth allocation between 4G and 5G schedulers based on resource sharing policy, network conditions (traffic load/demand, current requirements and estimated requirement of bandwidth, resource utilization, etc) and key performance indicators (KPIs including QoS metrics - throughput, delay, packet loss, etc.) of base stations (BSs) and user equipments (UEs).

Another object of the present invention is to provide a machine learning (ML) unit in a non-real-time-radio access network intelligent controller (Non-RT-RIC) and/or a near-real-time-radio access network intelligent controller (Near-RT RIC) for generating/updating a bandwidth sharing policy and bandwidth allocation between 4G and 5G based on the business needs, KPIs and network condition from each cell.

Another object of the present invention is to provide an improved DSS system that can be dynamically updated instead of a fixed allocation or vendor proprietary configuration.

Another object of the present invention is to provide an DSS system that has open interfaces to support RAN equipment from different vendors and provide a vendor neutral DSS solution instead of vendor proprietary solutions.

Accordingly, herein discloses a method for providing dynamic allocation of radio resources in a wireless communication system comprising a radio access network (RAN). The RAN includes a plurality of network nodes and the plurality of network nodes comprises a type one network scheduler and a type two network scheduler, each of the plurality of network nodes are connected to at least one user equipment (UE). The method includes receiving, by a first controller from a second controller, a dynamic spectrums sharing (DSS) policy configuration message, wherein the DSS policy configuration message comprising a resource allocation proportion between the type one network scheduler and the type two network scheduler. The method further includes receiving, by the first controller from the type one network scheduler and the type two network scheduler, a plurality of report messages and a plurality of key performance indicators (KPIs). The plurality of report messages provides update on radio resource parameters and the plurality of key performance indicators (KPIs) corresponds to key performance indicators of each cell and the user equipment connected to at least one of the type one network scheduler and the type two network scheduler. The method further includes assigning, by the first controller to the type one network scheduler and the type two network scheduler, a plurality of physical resource blocks (PRBs) based on the DSS policy configuration message, the plurality of report messages and the plurality of KPIs.

The method includes providing a weighted proportion for bandwidth allocation to the resource allocation proportion of the DSS policy configuration message for bandwidth allocation to the type one network scheduler and the type two network scheduler. The weighted proportion for bandwidth allocation is dynamically updated based on the plurality of report messages and the plurality of KPIs. Further, the method includes transmitting a policy feedback message to the second controller, wherein the policy feedback message includes feedback on the bandwidth allocation to the type one network scheduler and the type two network scheduler based on utilization of radio resources at the type one network scheduler and the type two network scheduler. Furthermore, the method includes updating, by the second controller, the DSS policy configuration message at a first predefined time interval. Moreover, the method includes receiving, by the first controller, the plurality of report messages and the plurality of KPIs from the type one network scheduler and the type two network scheduler at a second predefined time interval.

Accordingly, herein discloses a wireless communication system for providing dynamic allocation of radio resources. The wireless communication system comprising a radio access network (RAN), the RAN comprising a plurality of network nodes, the plurality of network nodes comprising a type one network scheduler and a type two network scheduler, each of the plurality of network nodes are connected to at least one user equipment (UE). The wireless communication system comprises a first controller and a second controller. The first controller is configured to receive a dynamic spectrums sharing (DSS) policy configuration message from the second controller. The DSS policy configuration message comprises a resource allocation proportion between the type one network scheduler and the type two network scheduler. Further, the first controller is configured to receive a plurality of report messages and a plurality of key performance indicators (KPIs) from the type one network scheduler and the type two network scheduler. The plurality of report messages provides update on radio resource parameters and the plurality of key performance indicators (KPIs) corresponds to key performance indicators of each cell and the user equipment connected to at least one of the type one network scheduler and the type two network scheduler. Furthermore, the first controller is configured to assign a plurality of physical resource blocks (PRBs) based on the DSS policy configuration message, the plurality of report messages and the plurality of KPIs to the type one network scheduler and the type two network scheduler.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modification.

### BRIEF DESCRIPTION OF DRAWING

The method and system are illustrated in the accompanying drawings, throughout which like reference letters indicate corresponding parts in the various figures. In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the embodiments herein will be better understood from the following description with reference to the drawings, in which:
FIG. 1 illustrates an architecture of a wireless communication system.
FIG. 2 illustrates an RIC architecture of FIG. 1.
FIG. 3 illustrates various hardware elements in a Non-RT-RIC.
FIG. 4 illustrates various hardware elements in a Near-RT-RIC.
FIG. 5 illustrates a signal sequence diagram implementing dynamic allocation of radio resources in the wireless communication system.
FIG. 6 is a flow chart illustrating a method for providing dynamic allocation of radio resources in the wireless communication system. The operations are performed by the Near-RT-RIC.
FIG. 7 is a flow chart illustrating a method for providing dynamic allocation of the radio resources in the wireless communication system. The operations are performed by the Non-RT-RIC.

It should be noted that the accompanying figures are intended to present illustrations of few exemplary embodiments of the present disclosure. These figures are not intended to limit the scope of the present disclosure. It should also be noted that accompanying figures are not necessarily drawn to scale.

### REFERENCE NUMERALS IN THE DRAWINGS

For a more complete understanding of the present invention parts, reference is now made to the following descriptions:
100. SMO.
200. Non-RT-RIC.
204. DSS configuration unit.
210. Resource configuration unit.
220. Communication unit.
300. Near-RT-RIC.
302. AI/ML unit.
304. DSS allocation unit.
310. Resource allocation unit.
320. Encoder unit.
330. Communication unit.
340. Configuration unit.
400. One or more core networks (EPC/NG core).
500. Radio access network (RAN).
600. Type one network scheduler.
700. Type two network scheduler.
800-1. User equipment (UE).
800-2. User equipment (UE).
1000. The wireless communication system.
6000. Flow chart.
6002. A step.
6004. A step.
6006. A step.
7000. Flow chart.
7002. A step.
7004. A step.
7006. A step.
01. An interface.
A1. An interface.
E2. An interface.
X and Y. The shared spectrum between 4G and 5G while Y in unshared 5G spectrum.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

Standard Networking Terms and Abbreviation:
RAN: A RAN may stand for radio access network. A radio access network (RAN) may be a part of a telecommunications system which may connect individual devices to other parts of a network through radio connections. A RAN may provide a connection of user equipment such as mobile phone or computer with the core network of the telecommunication systems. A RAN may be an essential part of access layer in the telecommunication systems which utilizes base stations (such as e node B , g node B) for establishing radio connections.
Wireless communication system: A wireless communication system may consist of various network components connected via wireless networks. The wireless networks may comprise of any wireless connectivity technology such as radio links, millimeter wave, etc. In this document, the wireless communication system may include one or more controller connected with radio access networks, which are further connected with a plurality of user equipments.
New RAN: A Radio Access Network which can support either NR/E-UTRA or both and have capabilities to interface with Next Generation Core Network (NG-CN). NG-C/U is a Control/User Plane interface toward NG-CN.
gNB: New Radio (NR) Base stations which have capability to interface with 5G Core named as NG-CN over NG-C/U (NG2/NG3) interface as well as 4G Core known as Evolved Packet Core (EPC) over S1-C/U interface.
LTE eNB: An LTE eNB is evolved eNodeB that can support connectivity to EPC as well as NG-CN.
Non-standalone NR: It is a 5G Network deployment configuration, where a gNB needs an LTE eNodeB as an anchor for control plane connectivity to 4G EPC or LTE eNB as anchor for control plane connectivity to NG-CN.
Standalone NR: It is a 5G Network deployment configuration where gNB does not need any assistance for connectivity to core Network, it can connect by its own to NG-CN over NG2 and NG3 interfaces.
Non-standalone E-UTRA: It is a 5G Network deployment configuration where the LTE eNB requires a gNB as anchor for control plane connectivity to NG-CN.
Standalone E-UTRA: It is a typical 4G network deployment where a 4G LTE eNB connects to EPC.
Xn Interface: It is a logical interface which interconnects the New RAN nodes i.e. it interconnects gNB to gNB and LTE eNB to gNB and vice versa.

As per the O-RAN Alliance (O-RAN-WG1 OAM Architecture-v02.00), "the near real time RAN Intelligent Controller (near RT RIC) is a logical function that enables near-real-time control and optimization of O-RAN elements and resources via fine-grained data collection and actions over E2 interface. The Non-Real Time Radio Intelligent Controller (non RT RIC) is a logical function that enables non-real-time control and optimization of RAN elements and resources, AI/ML workflow including model training and updates, and policy based guidance of applications/features in near-RT RIC. It is a part of the Service Management & Orchestration Framework and communicates to the near-RT RIC using the A1 interface. Non-RT control functionality (> 1s) and near-Real Time (near-RT) control functions (< 1s) are decoupled in the RIC. Non-RT functions include service and policy management, RAN analytics and model-training for some of the near-RT RIC functionality, and non-RT RIC optimization. The xAPP is an independent software plug-in to the Near-RT RIC platform to provide functional extensibility to the RAN by third parties." The near-RT RIC controller can be provided different functionalities by using programmable modules as xAPPs, from different operators and vendors.

The methods and processes described herein may have fewer or additional steps or states and the steps or states may be performed in a different order. Not all steps or states need to be reached. The methods and processes described herein may be embodied in, and fully or partially automated via, software code modules executed by one or more general purpose computers. The code modules may be stored in any type of computer-readable medium or other computer storage device. Some or all of the methods may alternatively be embodied in whole or in part in specialized computer hardware.

The results of the disclosed methods may be stored in any type of computer data repository, such as relational databases and flat file systems that use volatile and/or nonvolatile memory (e.g., magnetic disk storage, optical storage, EEPROM and/or solid state RAM).

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

Conditional language used herein, such as, among others, "can," "may," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without other input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings. Although the terms first, second, etc. may be used herein to describe various elements, these elements should not be limited by these terms. These terms are generally only used to distinguish one element from another.

An Open-Radio Access Network (O-RAN), which is an evolved version of prior radio access networks, makes the prior radio access networks more open and smarter than previous generations. The O-RAN provides real-time analytics that drive embedded machine learning systems and artificial intelligence back end modules to empower network intelligence. Further, the O-RAN includes virtualized network elements with open and standardized interfaces. The open interfaces are essential to enable smaller vendors and operators to quickly introduce their own services, or enables operators to customize the network to suit their own unique needs. Open interfaces also enable multivendor deployments, enabling a more competitive and vibrant supplier ecosystem. Similarly, open source software and hardware reference designs enable faster, more democratic and permission-less innovation.

Further, the O-RAN introduces a self-driving network by utilizing new learning based technologies to automate operational network functions. These learning based technologies make the O-RAN intelligent. Embedded intelligence, applied at both component and network levels, enables dynamic local radio resource allocation and optimizes networkwide efficiency. In combination with O-RAN's open interfaces, Al-optimized closed-loop automation is a new era for network operations.

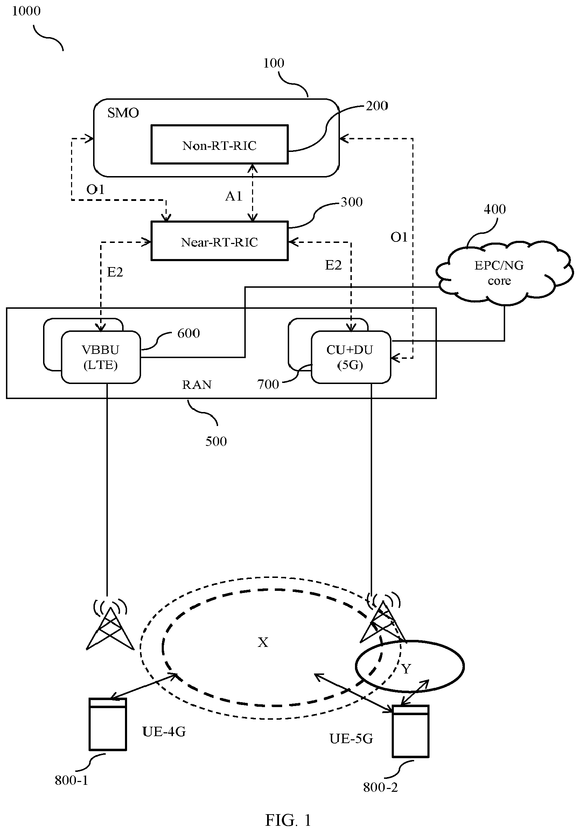

Referring now to the drawings, and more particularly to FIGS. 1 through 7, there are shown preferred embodiments.

FIG. 1 illustrates an architecture of a wireless communication system (1000). The wireless communication system (1000) may include at least one of an open-radio access network (O-RAN) architecture system, a fifth generation communication system, a long term evolution (LTE) communication system, a universal mobile telecommunications service (UMTS) communication system and a GERAN/GSM (GSM EDGE radio access network/global system for mobile communications) communication system.

In an implementation, the wireless communication system (1000) is the open-radio access network (O-RAN) architecture system. The O-RAN is an evolved version of prior radio access networks, makes the prior radio access networks more open and smarter than previous generations. The O-RAN provides real-time analytics that drive embedded machine learning systems and artificial intelligence back end modules to empower network intelligence. Further, the O-RAN includes virtualized network elements with open and standardized interfaces. The open interfaces are essential to enable smaller vendors and operators to quickly introduce their own services, or enables operators to customize the network to suit their own unique needs. Open interfaces also enable multivendor deployments, enabling a more competitive and vibrant supplier ecosystem. Similarly, open source software and hardware reference designs enable faster, more democratic and permission-less innovation.

Further, the O-RAN introduces a self-driving network by utilizing new learning based technologies to automate operational network functions. These learning based technologies make the O-RAN intelligent. Embedded intelligence, applied at both component and network levels, enables dynamic local radio resource allocation and optimizes network wide efficiency. In combination with O-RAN's open interfaces, Al-optimized closed-loop automation is a new era for network operations.

The wireless communication system (1000) includes a Service Management and Orchestration (SMO) framework (100) configured to provide SMO functions/services such as data collection and provisioning services of a RAN (500). As per O-RAN Alliance (O-RAN-WG1 OAM Architecture-v02.00), the SMO can be defined as "Service Management and Orchestration Framework is responsible for the management and orchestration of the managed elements under its span of control. The framework can for example be a third-party Network Management System (NMS) or orchestration platform. Service Management and Orchestration Framework must provide an integration fabric and data services for the managed functions. The integration fabric enables interoperation and communication between managed functions within the O-RAN domain. Data services provide efficient data collection, storage and movement capabilities for the managed functions. In order to implement multiple OAM architecture options together with RAN service modeling, the modeling of different OAM deployment options and OAM services (integration fabric etc.) must be supported by SMO".

The wireless communication system (1000) further includes a non-real-time radio access network intelligent controller (Non-RT-RIC) (200), a near real-time radio access network intelligent controller (Near-RT-RIC) (300) and a plurality of components. The plurality of components may be a radio access network (RAN) (500) comprising a plurality of network nodes such as at least a type one network scheduler (600) and a type two network scheduler (700). The plurality of components is at least one of disaggregated, reprogrammable and vendor independent. The Near-RT-RIC is a first controller (300) and comprises vendor independent APIs (Application programming interfaces) and the Non-RT-RIC is a second controller (200). The Near-RT-RIC may synonymously be called as the first controller (300) and the Non-RT-RIC may synonymously be called as the second controller (200). The RAN (500), herein, may be an O-RAN node operating in the wireless communication system (1000). The RAN (500) may implement single radio access technology (RAT) or multiple RATs. The data collection of the SMO framework may include, for example, data related to bandwidth of a plurality of network nodes or network schedulers (a type one network scheduler (600) and a type two network scheduler (700)) and user equipments (UEs) (800-1 and 800-2) connected to the type one network scheduler (600) and the type two network scheduler (700), respectively of the RAN (500). The network scheduler may be defined as a component of RAN which is connected to user equipments at one side and one or more controllers at the other side. The network scheduler may play an important aspect in scheduling the radio resources or resource blocks from the controller. It may enable a base station (such as e node B and g node B) to decide which user equipments (UEs) should be given resources (or resource blocks), how much resource should be given to send or receive data. A network scheduler may govern the scheduling process at per subframe basis i.e. scheduling resources at every 1 mili second. The network scheduler may perform scheduling for a 4G network as a 4G scheduler, and for a 5G network as a 5G scheduler. In the document, 4G scheduler may be considered as a first network scheduler and 5G scheduler may be considered as a second network scheduler.

The UEs (800-1 and 800-2) may be wireless devices e.g., mobile terminals, wireless terminals, terminals, and/or Mobile Stations (MS). The wireless devices may be, for example, portable, hand-held, computer-comprised, or vehicle-mounted mobile devices, enabled to communicate voice and/or data, via the RAN, with another entity, such as another terminal or a server. The UEs (800-1 and 800-2) are enabled to communicate wirelessly in a cellular communications network or wireless communication system. The communication may be performed e.g., between the UEs (800-1 and 800-2), between each UE 800-1/800-2 and the server via the RAN (500), and possibly one or more core networks (EPC/NG core) (400) comprised within the wireless communication system (1000).

The wireless communication system (1000) may be divided into cell areas, each cell area being served by the type one network scheduler (600) and/or the type two network scheduler (700). The type one network scheduler (600) and/or the type two network scheduler (700) may be included in, for example, an access node such as a Base Station (BS), e.g. a Radio Base Station (RBS), also referred to as e.g., evolved Node Base Station ("eNB"),"eNodeB","NodeB","B node", gNB, or BTS (Base Transceiver Station), depending on the technology and terminology used. For example, the type one network scheduler (600) may be in eNB, herein, that supports 4G/Long term evolution (LTE) RAT and the type two network scheduler (700) may be in gNB (Next Generation Node Base Station), herein, that supports 5G/NR RAT or vice-versa. That is, the type one network scheduler (600) corresponds to a 4G (fourth generation) base station, 4G scheduler, or evolved node base station and the type two network scheduler (700) corresponds to a 5G (fifth generation) base station, gNB.

In a scenario such as in the present invention, where the RAN (500) is utilized to support both the type one network scheduler (600) and the type two network scheduler (700), then a challenge and important issues confronting the telecom operators/mobile operators is network interoperability and radio resource/spectrum sharing. Hence, the present invention is focussed towards providing an optimal solution towards the latter issue of the radio resource/spectrum sharing between the plurality of network nodes (such as the type one network scheduler (600) and the type two network scheduler (700)) supporting different RATs (4G and 5G).

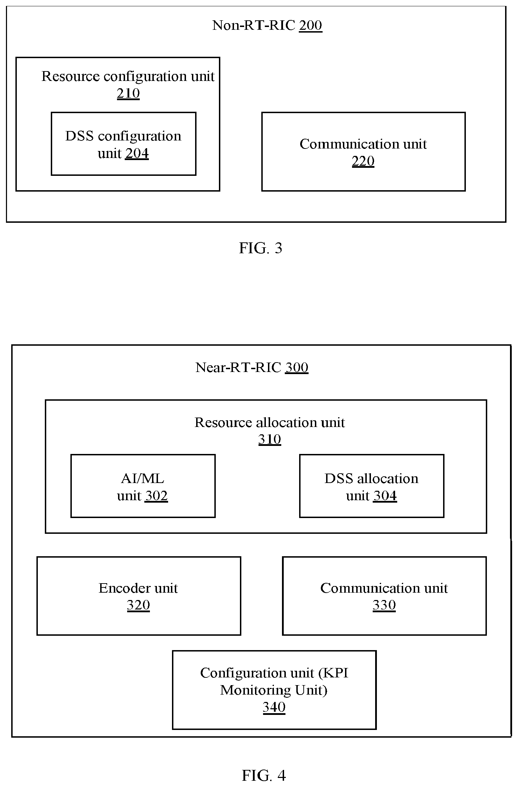

Referring back to the SMO (100), which includes a non-real-time-radio access network intelligent controller (Non-RT-RIC, i.e. a second controller) (200) that may be configured to support intelligent RAN optimization in non-real-time. Further, the second controller (Non-RT-RIC) (200) may be configured to leverage the SMO services. The various components and functioning of each component of the second controller (Non-RT-RIC) (200) are described in conjunction with FIG. 3.

As described earlier, that the focus of the present invention is to provide efficient/enhanced spectrum allocation which is achieved by the intellectualization offered by a first controller (i.e. Near-RT-RIC-near-real-time-radio access network intelligent controller) (300). That is, the first controller (Near-RT-RIC) (300) has the characteristic of intellectualization that can utilize artificial intelligence (AI)/ Machine learning (ML) technology to carry out services such as prediction, reasoning and the like.

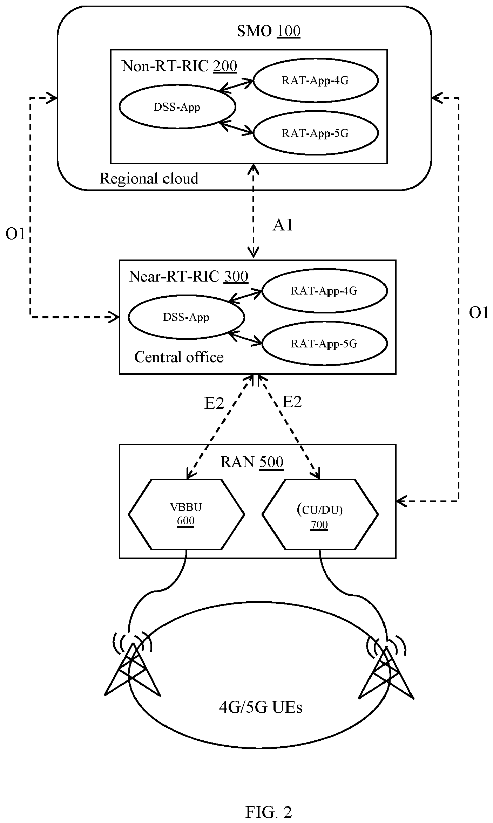

One example of spectrum sharing can be dynamic spectrum sharing (DSS) that may be implemented at both the Non-RT-RIC (200) and the Near-RT-RIC (300), as shown in FIG. 2. The DSS, herein, is considered as an example, as such other spectrum sharing mechanism(s) may be implemented in accordance with the present invention. Hereinafter, the term "second controller" is referred to as "Non-RT-RIC" and the term "first controller" is referred to as "Near-RT-RIC".

The Non-RT-RIC (200) and the Near-RT-RIC (300) may host xApps, for example, DSS-App that is configured to provide the spectrum proportion on X (X is the shared spectrum between 4G and 5G while Y in unshared 5G spectrum, in FIG. 1) to be shared between the type one network scheduler (600) and the type two network scheduler (700) using RAT-App-5G and RAT-App-4G, respectively. The xApps (at the Near-RT-RIC (300)) uses an "E2" interface to collect near real-time RAN (500) information and to provide value added services using these primitives, guided by the policies/configuration and the enrichment data provided by an "A1" interface from the xApps at the Non-RT-RIC (200)). An "01" interface collects data for training in the Non-RT RIC (200) (integrated with SMO (100)).

Unlike conventional DSS, where the RAN implements a local computational process for computing a proportion of the radio resources to be shared at each network node supporting different RAT, respectively. The present invention therefore implements a centralized DSS using the wireless communication system (1000) by involving a plurality of components such as the non-real-time RAN intelligent controller, the near-real-time RAN intelligent controller, the plurality of network nodes and at least one interface such as E2, A1, O1 or the like. The plurality of components is at least one of disaggregated, reprogrammable and vendor independent and the near-real-time RAN controller comprises vendor independent application programming interfaces (APIs).

Further, one such advantage of using the DSS in the wireless communication system (1000) is that DSS can be processed using the intellectualization of the Non-RT-RIC (200) and the Near-RT-RIC (300), that can dynamically generate a vendor independent bandwidth allocation (unlike conventional/existing vendor proprietary limitation) between the type one network scheduler (600) and the type two network scheduler (700).

FIG. 3 illustrates various hardware elements in the Non-RT-RIC (200). The Non-RT-RIC (200) may include a resource configuration unit (210) and a communication unit (220). The resource configuration unit (210) may include a DSS configuration unit (204).

The DSS configuration unit (204) may be used to configure (or split) radio resource assignments/spectrum based on the requirements. The requirements may be provided by the vendor/MNOs or may dynamically configured based on the current and future demand of the plurality of network nodes (the type one network scheduler (600)/the type two network scheduler (700)) and the UEs (800-1/800-2). The DSS configuration unit (204) may implement the resource configuration using the DSS-App hosted by the Non-RT-RIC (200) (as shown in FIG. 2). In one aspect, the DSS configuration unit (204) may be configured to generate a first radio resource allocation configuration (i.e. a dynamic spectrums sharing (DSS) policy configuration message) that may include details specifying certain proportion of resource sharing between 5G and 4G systems on a shared band, e.g., 40% of the resources for 5G and 60% for 4G. The first radio resource allocation configuration, herein, may be a default configuration provided by the vendor. In other words, the DSS configuration unit (204) may be configured to generate and update a dynamic spectrums sharing (DSS) policy configuration message at a first predefined time interval, wherein the DSS policy configuration message includes a resource allocation proportion between the type one network scheduler (600) and the type two network scheduler (700). The DSS policy configuration may be computed by a controller. The DSS policy configuration may be part of a non-real time radio intelligent controller (RIC), which may provide a DSS policy configuration message to the near real-time RIC for resource allocation to different network schedulers. The near real-time RIC may also provide different parameters to non real-time RIC for modifying the DSS policy. DSS policy may be dynamically updated based on periodic or real-time traffic requirements.

The DSS policy configuration message is transmitted to the Near-RT-RIC (300) using the communication unit (220) (may also be referred to as "communicator). The communication unit (220) may include a transmitter (not shown) and a receiver (not shown), an interface component(s) supporting plurality of interfaces (such as "A1", "01", and any other supporting interface, represented as dotted lines in the FIG. 1). The communication unit (220) may be implemented, for example, in form of software layers that may be executed on a cloud computing platforms/systems. The communication unit (220) may be configured to communicate with the SMO (100) to avail the SMO services and further with the Near-RT-RIC (300).

In another aspect, the communication unit (220) may be configured to communicate [with] "or" receive the data collection and provisioning services of the RAN (500) from the SMO (100). The data collection may include data such as a plurality of key performance indicators (KPIs) related to the bandwidth of the plurality of network nodes or QoS of each cell (the type one network scheduler (600) and the type two network scheduler (700)) and user equipments (UEs) (800-1 and 800-2) connected to the type one network scheduler (600) and the type two network scheduler (700), respectively of the RAN (500). The plurality of KPIs indicates Quality of Service (QoS) of a cell in each of the type one network scheduler (600) and the type two network scheduler (700). Alternatively, the plurality of key performance indicators (KPIs) corresponds to key performance indicators from the user equipment (800-1, 800-2) connected to at least one of the type one network scheduler (600) and the type two network scheduler (700).

In some aspects, the plurality of KPIs along with a feedback message(s) may be utilized by the DSS configuration unit (204) to generate a second radio resource allocation configuration (i.e., updated/new DSS configuration policy). The second radio resource allocation configuration may be an updated DSS policy configuration message that is transmitted to the communication unit (220), which is further transmitted to the Near-RT-RIC (300) by the communication unit (220). Also, the allocation (both the first and second radio resource allocation configuration) is generated whenever needed based on the proposed method. Hence, there will be a continuous sequence of allocations.

Unlike conventional bandwidth allocation/sharing systems, the proposed bandwidth allocation between 4G and 5G schedulers is based on the DSS policy configuration message and on the plurality of KPIs (including current bandwidth requirements, traffic, and estimated bandwidth requirement and traffic) of the type one network scheduler (600) and the type two network scheduler (700) and the UEs (800-1 and 800-2) connected to the type one network scheduler (600) and the type two network scheduler (700), respectively of the RAN (500).

FIG. 4 illustrates various hardware elements in the Near-RT-RIC (300). The Near-RT-RIC (300) may include a resource allocation unit (310), an encoder unit (320), a communication unit (330) and a configuration unit (or a KPI monitoring unit) (340). The resource allocation unit (310) may include an AI/ML unit (302) and a DSS allocation unit (304).

The communication unit (330) may be configured to receive the dynamic spectrums sharing (DSS) policy configuration message from the Non-RT-RIC (200). The DSS policy configuration message comprises the resource allocation proportion between the type one network scheduler (600) and the type two network scheduler (700) as communicated by the Non-RT-RIC (200).

The functionalities/components of the communication unit (330) is similar to the functionalities/components of the communication unit (220), as described in the FIG. 3. The interface component(s) of the communication unit (330) supports "E2" (represented as dotted lines in the FIG. 1) interface in addition to the plurality of interfaces (such as "A1" and "01") supported by the communication unit (220). The "E2" interface can be used to communicate the singling information/messages between the RAN (500) and the Near-RT-RIC (300).

Further, the communication unit (330) may be configured to receive a plurality of report messages and a plurality of key performance indicators (KPIs) from the type one network scheduler (600) and the type two network scheduler (700) over the "E2" interface at a second predefined time interval.The received plurality of report messages may be a plurality of periodic report messages received by the communication unit (330). Also, the received plurality of report messages may be a plurality of network event driven report messages received by the communication unit (330). The KPIs from the type one network scheduler (600) and the type two network scheduler may also be received by the communication unit (33) atleast one of periodically and based on network event. The network event may be atleast one of: A3 event, radio link failures, change in network parameters, change in UE parameters and change in network scheduler parameters. The plurality of periodic report messages provides update on radio resource parameters and may include, for example, at least one of utilization status of radio resources, load conditions related to current traffic of the UE (800-1, 800-2) at a plurality of cells corresponding to the type one network scheduler (600) and the type two network scheduler (700), PRB buffer demand/size from the type one network scheduler and the type two network scheduler, PRB deficit at the type one network scheduler and the type two network scheduler, arrival rate, optional bitmap assignment proposal, and protected resource element (RE) pattern for physical resource blocks (PRBs) in bitmap structure. Additionally, the plurality of key performance indicators (KPIs) corresponds to key performance indicators of the cell and the user equipment (800-1, 800-2) connected to at least one of the type one network scheduler (600) and the type two network scheduler (700). As a standard definition, the physical resource block (PRB) may be a smallest unit of frequency or bandwidth that can be allocated to a user. The physical resource block (or resource block) may typically 180 kHz wide in frequency and 1 slot long in time. In frequency, resource blocks may be either 12 x 15 kHz subcarriers or 24 x 7.5 kHz subcarriers wide. The number of subcarriers used per resource block for most channels and signals may be 12 subcarriers. Radio assignments in the telecommunication system may be achieved using allocation of physical resource blocks.

The plurality of periodic report messages, may be received from the network scheduler by the plurality of controllers in the RAN. These periodic reports may be received on regular intervals by the plurality of controllers and include multiple parameters defining traffic related parameters, resource demand, resource deficits. Resource demand may show resource allocation requirement by the UEs at network scheduler, while resource deficit denotes utilization of current or previous resources by the UEs. The traffic related parameters may signifie requests from a plurality of UEs connected with the network schedulers for allocation of physical resource blocks (PRBs). The plurality of UEs periodically may send request for PRBs to the network scheduler which processes the requests and transmits the processed requests and parameters to the controllers. A buffer report which signifies traffic reports from the network scheduler may include the bitmap PRB assignment configuration. The bitmap PRB assignment configuration may signifie traffic size, bitmap information on the resource blocks, requested bitmap from the UEs based on resource requirement at specific time frames (system frame numbers and subframe numbers at UE end), proposed PRB based on protected bitmap information, current system frame number which denotes position of current resource blocks and elements being used by the UEs through network scheduler.

The key performance indicators of UEs and associated cells, received in periodic reports by the controllers, from the network scheduler, may denote current performance of UEs and associated cells based on previous and current resource allocation by the network scheduler. With this information, controller may receive the information related to performance of the UE and understands what UE may require precisely. The KPI along with periodic reports basically may inform the controller about the current traffic, expected traffic data, performance data, and resource utilization which helps the controller in determining expected requirements by the UE and network scheduler for better performance and efficient utilization of radio resources.

The DSS allocation unit (304) (may also be referred as "resource/spectrum allocation unit (304)) may be configured to allocate the radio resource assignments/spectrum, to the respective 4G and 5G schedulers i.e. the type one network scheduler (600) and the type two network scheduler (700), in accordance with the dynamic spectrums sharing (DSS) policy configuration message. The type one network scheduler (600) and the type two network scheduler (700) are then configured to allocate the resources to the respective UEs (800-1 and 800-2) from the available resources of the dynamic spectrums sharing (DSS) policy configuration message.

That is, the DSS allocation unit (304) may be configured to provide a weighted proportion for bandwidth allocation to the resource allocation proportion of the DSS policy configuration message for bandwidth allocation to the type one network scheduler (600) and the type two network scheduler (700). The weighted proportion for bandwidth allocation is dynamically updated based on the plurality of periodic report messages and the plurality of KPIs.

The AI/ML unit (302) may be configured to implement machine learning/artificial intelligence technologies to generate and deploy machine learning models/prediction models and to assist the DSS allocation unit (304) for prediction of load/traffic requirement of the RAN (500). For example, in some aspects, the plurality of periodic report messages may be transmitted to the DSS allocation unit (304) as an input and the AI/ML unit (302) may assist the DSS allocation unit (304) to process the received input and provide an output that may be transmitted to the encoder unit (320). For example, the AI/ML unit (302) may be configured within the DSS allocation unit (304) and/or communicatively coupled to the DSS allocation unit (304). The AI/ML unit (302) may be configured to assist the DSS allocation unit (304) to predict a traffic that enhances the spectrum allocation and/or to effectively manage the interoperability interference.

Thus, the DSS allocation unit (304) may be configured to assign a plurality of physical resource blocks (PRBs) based on the DSS policy configuration message, the plurality of periodic report messages and the plurality of KPIs between the type one network scheduler (600) and the type two network scheduler (700) in real-time. That is, the DSS allocation unit (304) may be configured to allocate the plurality of physical resource blocks for a certain number of contiguous subframes between the type one network scheduler (600) and the type two network scheduler (700), by splitting and assigning the plurality of physical resource blocks (PRBs) according the proportion in the first radio resource allocation configuration, reported traffic demand from the eNBs and gNBs and intelligent prediction on future traffic demand, such that the radio resource assignment for the eNBs and gNBs (i.e., the type one network scheduler (600) and the type two network scheduler (700)) are orthogonal to each other.

In an implementation, the encoder unit (320) may be configured to encode a PRB assignment from the radio resources assignments that are dynamically allocated using a bitmap (bit vectors). The bitmap assignment message comprising the encoded PRB assignment is then transmitted, by the communication unit (330) to the type one network scheduler (600) and the type two network scheduler (700) such that the type one network scheduler (600) and the type two network scheduler (700) are synchronized on time for the radio resource allocation without interference. A bitmap may represent a resource block group allocated to a user equipment, i.e. the bitmap is a combination of bits allocated to a resource block group for a specific subframe number. The bitmap may actually show allocation of bandwidth for a resource block group containing multiple resource blocks. Example of bit map may be 00111111110000, which shows that allocation of resource blocks has started from resource block 3, as the 3^{rd} bit in the example bitmap is 1 and allocation gets completed at resource block 10, as 10^{th} bit is also 1, followed by 0 bits.

Consider a 100*100 matrix, on which each rows are represented as resource blocks, starting from resource block 1 to resource block 100, and columns are represented as subframe numbers. The subframe number may start from 0 and end with 9^{th} column for each system frame number (SFN), which shows 10 SFN in the 100*100 matrix, each SFN containing 10 subframe numbers. Let's say that the example bitmap 00111111110000 may start from subframe number 0 for system frame number (SFN) 10, then the bitmap may be read as: allocation from resource block 3 to resource block 9 in subframe number 0 for system frame number 10 can be used for a cell.

Further, a resource block may comprise of a plurality of resource elements (RE), each resource element being placed in individual subframe for a specific resource block (PRB). Also, all REs in each PRB pair which may be used for the reference and control signals should be protected from data transmission. These protected bits may be shown in the bitmap of REs in each PRB pair and may be known as protected bits. The protected bits may not be used during resource allocation, as it cannot be used for data communication. The available bandwidth for allocation may be calculated by reducing the total bandwidth as per the bitmap information, by the protected bits, and then the resource blocks may be allocated. The protected RE may follow repeated pattern in the resource block. In the bitmap of REs occupied by the protected signal within one PRB, each position in the bitmap may represent an RE in one PRB; value "0" may indicate "resource not protected", value "1" may indicate "resource protected ".

The type one network scheduler (600) and the type two network scheduler (700) receives the resource assignment message over the "E2" interface and decodes, using a decoder of the respective schedulers (4G and 5G), the radio resources assignments (allocated using the first radio resource allocation configuration) in a bitmap for each cell. Thus, when the scheduler schedules resource for the UEs (800-1a and 800-2) in each cell on the shared spectrum (X, as shown in the FIG. 1), it only uses those PRBs that are marked as allowable to the cell for specified sub-frames.

The configuration unit (340) (may also be referred as KPI monitoring unit) may be configured to receive a feedback message(s) from the type one network scheduler (600) and the type two network scheduler (700) using the communication unit (330). The feedback messages indicate a difference between the first radio resource allocation configuration and the resource requirement from the RAN (500). For example, the resource requirement can be the scarcity or oversupply (e.g., between assigned and unused PRBs) in the radio resource assignments (i.e., scarcity or oversupply in the radio resource assignments from the first radio resource allocation configuration transmitted by the Near-RT-RIC (300) to the RAN (500)). In other words, the feedback message(s), herein, may include/indicate, for example, a feedback on the proportion of resource shared between 5G and 4G systems (e.g., 40% of the resources for 5G and 60% for 4G) using the first radio resource allocation configuration and the feedback message may indicate the scarcity (over/under needed) in the radio resource assignments allocated using the first radio resource allocation configuration. For example, the number of UEs (other than the UE (800-1)) connected to the type one network scheduler (600) may increase a threshold limit (maximum number of the UEs that are allowed to be connected to the type one network scheduler (600)). The threshold limit may be provided as per the requirement, services and based on the spectrum. Hence, due to this threshold requirement, there will be a shortage in the radio resources to be allocated that may result in poor connectivity and network failure.

In some aspect, the configuration unit (340) may be configured to generate a policy feedback message based on the received feedback message from the type one network scheduler (600) and the type two network scheduler (700). The policy feedback message may include/indicate the scarcity/oversupply of the radio resources in the first radio resource allocation configuration. For example, the policy feedback message indicates that there is shortage in the radio resources and requests to provide the additional spectrum "or" an effective resource allocation configuration (such as the "second resource allocation configuration") that can meet the bandwidth demand (which is dynamic) of the cell and UEs. That is, the policy feedback message may include feedback on the bandwidth allocation to the type one network scheduler (600) and the type two network scheduler (700) based on utilization of radio resources at the type one network scheduler and the type two network scheduler.

The communication unit (330) may further be configured to transmit the policy feedback message to the Non-RT-RIC (200) over the "A1" interface.

In response to meet the transmission of the policy feedback message (or configuration feedback message) and in order to meet the dynamic demand in the bandwidth (as described above), the Near-RT-RIC (300) may be configured to receive and implement the second resource allocation configuration received i.e. configured to receive a new DSS policy configuration message from the Non-RT-RIC (200).

Unlike conventional static spectrum allocation, the proposed spectrum allocation is dynamically updated based on the feedbacks from the cell and UEs.

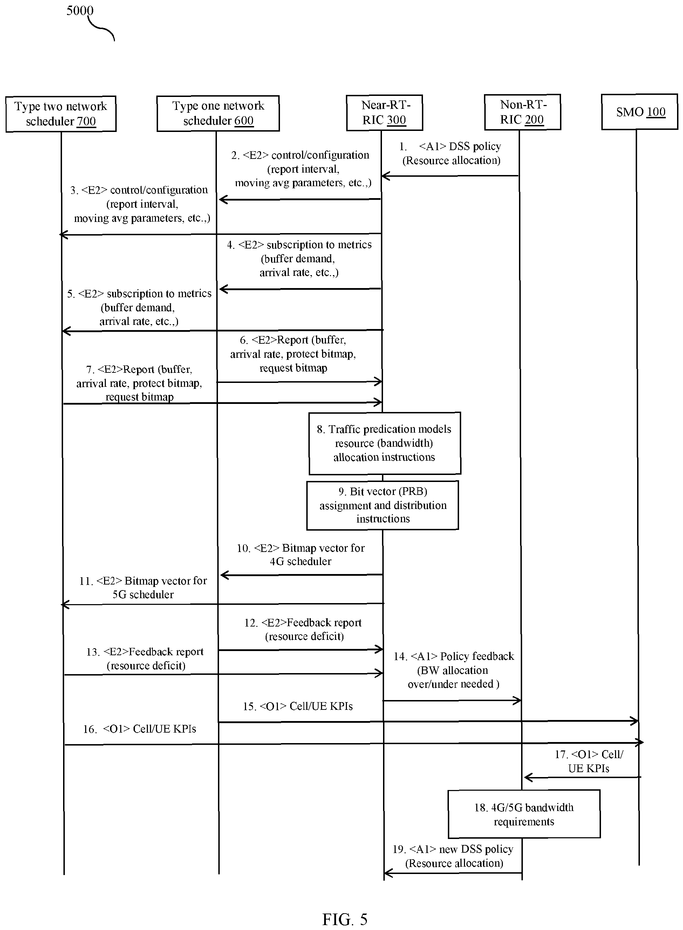

FIG. 5 illustrates a signal sequence diagram (5000) implementing the dynamic allocation of the radio resources in the wireless communication system (1000).

At step 1, the Non-RT-RIC (200) may transmit, over the "A1" interface, the DSS policy configuration message (the first radio resource allocation configuration) to the Near-RT-RIC (300). The DSS policy configuration message comprises the resource allocation proportion between the type one network scheduler (in eNB) (600) and the type two network scheduler (in gNB) (700).

At steps 2 and 3, the Near-RT-RIC (300) may transmit, over the "E2" interface, control and/or configuration parameters such as report interval, moving average parameters, etc., to the type one network scheduler (600) and the type two network scheduler (700).

At steps 4 and 5, the Near-RT-RIC (300) may transmit, over the "E2" interface, subscription to metrics (buffer demand, arrival rate, etc.,) to the type one network scheduler (600) and the type two network scheduler (700).

At steps 6 and 7, the Near-RT-RIC (300) may receive, over the "E2" interface, a report (buffer, arrival rate, protect bitmap, request bitmap) from the type one network scheduler (600) and the type two network scheduler (700). That is, the Near-RT-RIC (300) may receive the plurality of periodic report messages and the plurality of key performance indicators (KPIs) from the type one network scheduler (600) and the type two network scheduler (700). The plurality of periodic report messages provides update on the radio resource parameters and the plurality of key performance indicators (KPIs) corresponds to the key performance indicators of the cell and the user equipment (800-1, 800-2) connected to at least one of the type one network scheduler (600) and the type two network scheduler (700).

At step 8, the Near-RT-RIC (300) may be configured to predict the traffic demand with ML models and generate resource allocation (using the DSS allocation unit (304) assisted by the AI/ML unit (302)). Further, at step 9, the Near-RT-RIC (300) may be configured to encode (using the encoder (320)) the plurality of physical resource block assignments using the bit vector.

At steps 10 and 11, the Near-RT-RIC (300) may be configured to transmit/distribute, over the "E2" interface, the plurality of physical resource blocks (or the respective bit vector) to each of the type one network scheduler (600) and the type two network scheduler (700). That is, the Near-RT-RIC (300) may be configured to assign the plurality of physical resource blocks (PRBs) based on the DSS policy configuration message, the plurality of periodic report messages and the plurality of KPIs to the type one network scheduler (600) and the type two network scheduler (700).

At steps 12 and 13, the Near-RT-RIC (300) may be configured to receive, over the "E2" interface, the feedback message (resource deficit) from each of the type one network scheduler (600) and the type two network scheduler (700).

At step 14, the Near-RT-RIC (300) may be configured to transmit, over the "A1" interface, the policy feedback message to the Non-RT-RIC (200).

At steps 15 and 16, the SMO (100) may be configured to receive, over the "01" interface, the plurality of KPIs (of cell/UE) from each of the type one network scheduler (600) and the type two network scheduler (700).

At step 17, the Non-RT-RIC (200) may be configured to receive the plurality of KPIs (of cell/UE) from the SMO (100).

At step 18, the Non-RT-RIC (200) may be configured to generate/update a new DSS policy configuration message/the second radio resource allocation configuration based on bandwidth requirements.

At step 19, the Non-RT-RIC (200) may be configured to transmit the new DSS policy configuration message/the second radio resource allocation configuration (i.e., new or updated DSS policy configuration) to the Near-RT-RIC (300) over the "A1" interface.

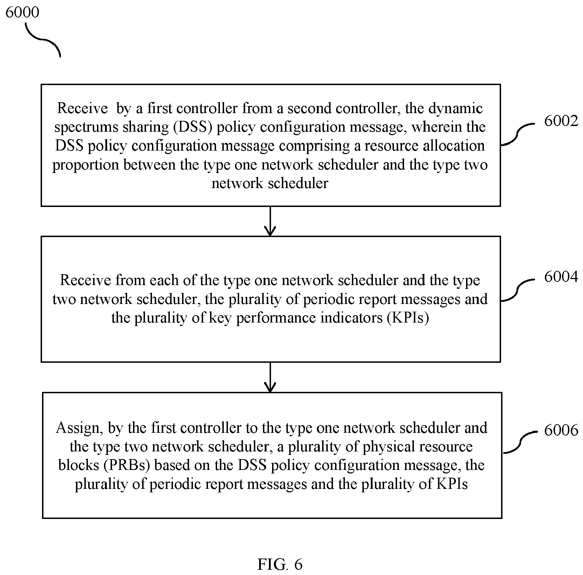

FIG. 6 is a flow chart (6000) illustrating a method for providing dynamic allocation of the radio resources in the wireless communication system (1000). The operations (6002-6006) are performed by the Near-RT-RIC (300).

At step (6002), the method includes receiving, by a first controller (300) from a second controller (200), the dynamic spectrums sharing (DSS) policy configuration message, wherein the DSS policy configuration message comprising a resource allocation proportion between the type one network scheduler (600) and the type two network scheduler (700).

At step (6004), the method includes receiving from each of the type one network scheduler (600) and the type two network scheduler (700), the plurality of periodic report messages and the plurality of key performance indicators (KPIs). The plurality of periodic report messages provides update on the radio resource parameters and the plurality of key performance indicators (KPIs) corresponds to key performance indicators of the cell and the user equipment (800-1, 800-2) connected to at least one of the type one network scheduler (600) and the type two network scheduler (700). The plurality of periodic report messages includes at least one of utilization status of radio resources, load conditions related to current traffic of the UE (800-1, 800-2) at a plurality of cells corresponding to the type one network scheduler (600) and the type two network scheduler (700), PRB buffer demand/size from the type one network scheduler and the type two network scheduler, PRB deficit at the type one network scheduler and the type two network scheduler, arrival rate, optional bitmap assignment proposal, and protected resource element (RE) pattern for physical resource blocks (PRBs).

At step (6006), the method includes assigning, by the first controller (300) to the type one network scheduler (600) and the type two network scheduler (700), the plurality of physical resource blocks (PRBs) based on the DSS policy configuration message, the plurality of periodic report messages and the plurality of KPIs.

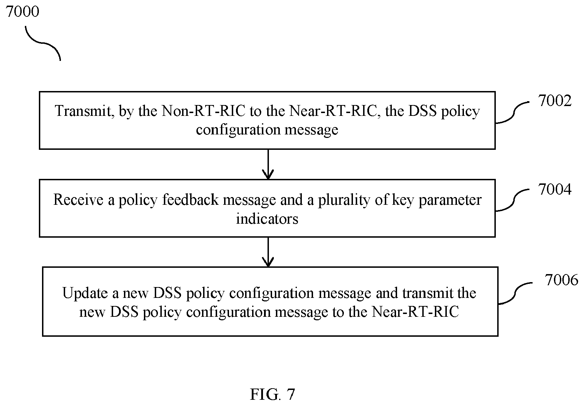

FIG. 7 is a flow chart (7000) illustrating a method for providing dynamic allocation of the radio resources in the wireless communication system (1000). The operations (7002-7006) are performed by the Non-RT-RIC (200).

At step (7002), the method includes transmitting, by the Non-RT-RIC (200) to the Near-RT-RIC (300), the DSS policy configuration message.

At step (7004), the method includes receiving the policy feedback message and the plurality of KPIs. The policy feedback message includes feedback on the bandwidth allocation to the type one network scheduler (600) and the type two network scheduler (700) based on utilization of the radio resources at the type one network scheduler and the type two network scheduler. The plurality of KPIs indicates Quality of Service (QoS) of the cell in each of the type one network scheduler (600) and the type two network scheduler (700), and the user UE (800-1, 800-2), connected to the cell.

At step (7006), the method includes update a new DSS policy configuration message and transmit the new DSS policy configuration message to the Near-RT-RIC (300).

The various actions, acts, blocks, steps, or the like in the flow charts (6000) and (7000) may be performed in the order presented, in a different order or simultaneously. Further, in some embodiments, some of the actions, acts, blocks, steps, or the like may be omitted, added, modified, skipped, or the like without departing from the scope of the invention.

In one aspect, the disclosed method provides dynamic allocation of resource blocks by efficiently utilizing the bandwidth in the wireless communication system. The method utilizes DSS policy configuration, UE KPIs and periodic reports from the network schedulers in order to determine the optimized resource allocation within the wireless communication system, which is an advanced way of utilizing resources (PRBs) in real-time. The method dynamically updates resource allocation based on real-time, with updates in the periodic reports and performance at user equipments. Further, the method is implemented by using applications at the controller, which has very low latency or which can process information in real-time. The method also enables periodic updation of DSS policy configuration at non RT RIC, based on the dynamic allocation of resource blocks, UE KPIs and periodic reports from the network schedulers.

The embodiments disclosed herein can be implemented using at least one software program running on at least one hardware device and performing network management functions to control the elements.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Although the present disclosure has been explained in relation to its preferred embodiment(s) as mentioned above, it is to be understood that many other possible modifications and variations can be made without departing from the spirit and scope of the inventive aspects of the present invention. It is, therefore, contemplated that the appended claim or claims will cover such modifications and variations that fall within the true scope of the invention.

The present invention also includes the embodiments set out in the following numbered clauses:
1. A method for providing dynamic allocation of radio resources in a wireless communication system (1000) comprising a radio access network (RAN) (500), the RAN (500) comprising a plurality of network nodes, the plurality of network nodes comprising a type one network scheduler (600) and a type two network scheduler (700), each of the plurality of network nodes are connected to at least one user equipment (UE) (800-1, 800-2), the method comprising:
   receiving, by a first controller (300) from a second controller (200), a dynamic spectrums sharing (DSS) policy configuration message, wherein the DSS policy configuration message comprising a resource allocation proportion between the type one network scheduler (600) and the type two network scheduler (700);
   receiving, by the first controller (300) from the type one network scheduler (600) and the type two network scheduler (700), a plurality of report messages and a plurality of key performance indicators (KPIs), wherein the plurality of report messages provides update on radio resource parameters, wherein the plurality of key performance indicators (KPIs) corresponds to key performance indicators of the type one network scheduler (600), the type two network scheduler (700) and the user equipment (800-1, 800-2) connected to at least one of the type one network scheduler (600) and the type two network scheduler (700); and
   assigning, by the first controller (300) to the type one network scheduler (600) and the type two network scheduler (700), a plurality of physical resource blocks (PRBs) based on the DSS policy configuration message, the plurality of report messages and the plurality of KPIs;
   wherein the plurality of report messages from the type one network scheduler (600) and the type two network scheduler (700) are atleast one of periodic and event driven,
   wherein the plurality of key performance indicators (KPIs) from the type one network scheduler (600) and the type two network scheduler (700) are atleast one of periodic and event driven.
2. The method as claimed in claim 1, further comprising:
   providing a weighted proportion for bandwidth allocation to the resource allocation proportion of the DSS policy configuration message for bandwidth allocation by the first controller (300) to the type one network scheduler (600) and the type two network scheduler (700), wherein the weighted proportion for bandwidth allocation is dynamically updated based on the plurality of report messages and the plurality of KPIs.
3. The method of any preceding clause, further comprising:
   transmitting a policy feedback message to the second controller (200), wherein the policy feedback message includes feedback on the bandwidth allocation to the type one network scheduler (600) and the type two network scheduler (700) based on utilization of radio resources at the type one network scheduler and the type two network scheduler.
4. The method of any preceding clause, further comprising:
   updating, by the second controller (200), the DSS policy configuration message at a first predefined time interval.
5. The method of any preceding clause, further comprising:
   receiving, by the first controller (300), the plurality of report messages and the plurality of KPIs from the type one network scheduler (600) and the type two network scheduler (700) at a second predefined time interval.
6. The method of any preceding clause, wherein the wireless communication system (1000) is an open-radio access network (O-RAN) architecture system, wherein the O-RAN architecture system includes a plurality of components such as a non-real-time RAN intelligent controller, a near real time RAN intelligent controller, the plurality of network nodes, at least one interface, wherein the plurality of components is at least one of: disaggregated, reprogrammable and vendor independent,
   wherein the near real-time RAN controller comprises vendor independent application programming interfaces (APIs).
7. The method of any preceding clause, wherein the wireless communication system (1000) is the O-RAN architecture system, wherein the O-RAN architecture system includes the plurality of components such as the non-real-time RAN intelligent controller, the near real time RAN intelligent controller, the plurality of network nodes, the at least one interface, wherein the plurality of components is at least one of: disaggregated, reprogrammable and vendor independent,
   wherein the method is performed by the near real-time RAN controller.
8. The method of any preceding clause, wherein the radio resource assignment for the type one network scheduler (600) and the type two network scheduler (700) are orthogonal to each other.
9. The method of any preceding clause, wherein the plurality of report messages includes at least one of utilization status of radio resources at a plurality of cells corresponding to the type one network scheduler (600) and the type two network scheduler (700), load conditions related to current traffic of the UE (800-1, 800-2) at the type one network scheduler and the type two network scheduler, PRB buffer demand/size from the type one network scheduler and the type two network scheduler, PRB deficit at the type one network scheduler and the type two network scheduler, arrival rate, optional bitmap assignment proposal, and protected resource element (RE) pattern for physical resource blocks (PRBs) of the type one network scheduler and the type two network scheduler.
10. The method of any preceding clause, wherein the first controller (300) is the near-real-time RAN intelligent controller, the second controller (200) is the non-real-time RAN intelligent controller, the type one network scheduler (600) corresponds to a 4G (fourth generation) base station or evolved node base station and the type two network scheduler (700) corresponds to a 5G (fifth generation) base station.
11. The method of any preceding clause, wherein the assigning of the plurality of physical resource blocks (PRBs), by the first controller (300), between the type one network scheduler (600) and the type two network scheduler (700) is performed in real time.
12. The method of any preceding clause, wherein the wireless communication system (1000) includes at least one of: the O-RAN architecture system, a fifth generation communication system, a long term evolution (LTE) communication system, a Universal Mobile Telecommunications Service (UMTS) communication system and a GERAN/GSM (GSM EDGE Radio Access Network/ Global System for Mobile Communications) communication system.
13. A wireless communication system (1000) for providing dynamic allocation of radio resources, the wireless communication system (1000) comprising a radio access network (RAN) (500), the RAN (500) comprising a plurality of network nodes, the plurality of network nodes comprising a type one network scheduler (600) and a type two network scheduler (700), each of the plurality of network nodes are connected to at least one user equipment (UE) (800-1, 800-2), the wireless communication system (1000) comprising:
   a first controller (300) and a second controller (200);
   the first controller (300) configured to receive a dynamic spectrums sharing (DSS) policy configuration message from the second controller (200), wherein the DSS policy configuration message comprising a resource allocation proportion between the type one network scheduler (600) and the type two network scheduler (700);
   the first controller (300) configured to receive a plurality of report messages and a plurality of key performance indicators (KPIs) from the type one network scheduler (600) and the type two network scheduler (700), wherein the plurality of report messages provides update on radio resource parameters, wherein the plurality of key performance indicators (KPIs) corresponds to key performance indicators of the type one scheduler (600), the type two scheduler (700) and the user equipment (800-1, 800-2) connected to at least one of the type one network scheduler (600) and the type two network scheduler (700); and
   the first controller (300) configured to assign a plurality of physical resource blocks (PRBs) based on the DSS policy configuration message, the plurality of report messages and the plurality of KPIs to the type one network scheduler (600) and the type two network scheduler (700),
   wherein the plurality of report messages from the type one network scheduler (600) and the type two network scheduler (700) are atleast one of periodic and event driven, wherein the plurality of key performance indicators (KPIs) from the type one network scheduler (600) and the type two network scheduler (700) are atleast one of periodic and event driven.
14. The wireless communication system (1000) of clause 13, wherein the first controller (300) is configured to provide a weighted proportion for bandwidth allocation to the resource allocation proportion of the DSS policy configuration message for bandwidth allocation to the type one network scheduler (600) and the type two network scheduler (700), wherein the weighted proportion for bandwidth allocation is dynamically updated based on the plurality of report messages and the plurality of KPIs.
15. The wireless communication system (1000) of any one of clauses 13 to 14, wherein the first controller (300) is configured to transmit a policy feedback message to the second controller (200), wherein the policy feedback message includes feedback on the bandwidth allocation to the type one network scheduler (600) and the type two network scheduler (700) based on utilization of radio resources at the type one network scheduler and the type two network scheduler.
16. The wireless communication system (1000) of any one of clauses 13 to 15, wherein the second controller (200) is configured to update the DSS policy configuration message at a first predefined time interval.
17. The wireless communication system (1000) of any one of clauses 13 to 16, wherein the first controller (300) is configured to receive the plurality of report messages and the plurality of KPIs from the type one network scheduler (600) and the type two network scheduler (700) at a second predefined time interval.
18. The wireless communication system (1000) of any one of clauses 13 to 17, wherein the wireless communication system (1000) is an open-radio access network (O-RAN) architecture system, wherein the O-RAN architecture system includes a plurality of components such as a non-real-time RAN intelligent controller, a near real time RAN intelligent controller, the plurality of network nodes, at least one interface, wherein the plurality of components is at least one of: disaggregated, reprogrammable and vendor independent,
   wherein the near real-time RAN controller comprises vendor independent application programming interfaces (APIs).
19. The wireless communication system (1000) of any one of clauses 13 to 18, wherein the wireless communication system (1000) is the O-RAN architecture system, wherein the O-RAN architecture system includes the plurality of components such as the non-real-time RAN intelligent controller, the near real time RAN intelligent controller, the plurality of network nodes, the at least one interface, wherein the plurality of components is at least one of: disaggregated, reprogrammable and vendor independent,
   wherein the function is performed by the near real-time RAN controller.
20. The wireless communication system (1000) of any one of clauses 13 to 19, wherein the radio resource assignment for the type one network scheduler (600) and the type two network scheduler (700) are orthogonal to each other.
21. The wireless communication system (1000) of any one of clauses 13 to 20, wherein the plurality of report messages includes at least one of utilization status of radio resources at a plurality of cells corresponding to the type one network scheduler (600) and the type two network scheduler (700), load conditions related to current traffic of the UE (800-1, 800-2) at the type one network scheduler and the type two network scheduler, PRB buffer demand/size from the type one network scheduler and the type two network scheduler, PRB deficit at the type one network scheduler and the type two network scheduler, arrival rate, optional bitmap assignment proposal, and protected resource element (RE) pattern for physical resource blocks (PRBs) of the type one network scheduler and the type two network scheduler.
22. The wireless communication system (1000) of any one of clauses 13 to 21, wherein the first controller (300) is the near-real-time RAN intelligent controller, the second controller (200) is the non-real-time RAN intelligent controller, the type one network scheduler (600) corresponds to a 4G (fourth generation) base station or evolved node base station and the type two network scheduler (700) corresponds to a 5G (fifth generation) base station.
23. The wireless communication system (1000) of any one of clauses 13 to 22, wherein the assigning of the plurality of physical resource blocks (PRBs), by the first controller (300), between the type one network scheduler (600) and the type two network scheduler (700) is performed in real time.
24. The wireless communication system (1000) of any one of clauses 13 to 23, wherein the wireless communication system (1000) includes at least one of: the O-RAN architecture system, a fifth generation communication system, a long term evolution (LTE) communication system, a Universal Mobile Telecommunications Service (UMTS) communication system and a GERAN/GSM (GSM EDGE Radio Access Network/ Global System for Mobile Communications) communication system.
25. A method for providing dynamic allocation of radio resources in a wireless communication system (1000) comprising a type one network scheduler (600) and a type two network scheduler (700), the type one network scheduler (600) and the type two network scheduler (700) are connected to at least one user equipment (UE) (800-1, 800-2), the method comprising:
   transmitting, by a non-real-time-radio access network intelligent controller (Non-RT-RIC) (200) to a near-real-time-radio access network intelligent controller (Near-RT-RIC) (300), a dynamic spectrum sharing (DSS) policy configuration message;
   transmitting, by the Near-RT-RIC (300) to the type one network scheduler (600) and the type two network scheduler (700), configuration parameters and subscription to metrics; receiving, by the Near-RT-RIC (300) from the type one network scheduler (600) and the type two network scheduler (700), a plurality of report messages and a plurality of key performance indicators (KPIs), wherein the Near-RT-RIC (300) is configured to generate a traffic demand prediction, generate a resource allocation and encode a plurality of physical resource block (PRB) assignment using a bit vector;
   assigning, by the Near-RT-RIC (300) to the type one network scheduler (600) and the type two network scheduler (700), the plurality of physical resource blocks based on the DSS policy configuration message, the plurality of report messages and the plurality of KPIs;
   receiving, by the Near-RT-RIC (300), a feedback message from each of the type one network scheduler (600) and the type two network scheduler (700) and in response to the feedback message, transmitting a policy feedback message to the Non-RT-RIC (200); and
   receiving, by a service management and orchestration (SMO) framework (100), the plurality of KPIs from each of the type one network scheduler (600) and the type two network scheduler (700), wherein the plurality of KPIs is further transmitted to the Non-RT-RIC (200) from the SMO framework (100),
   wherein the plurality of report messages from the type one network scheduler (600) and the type two network scheduler (700) are atleast one of periodic and event driven,
   wherein the plurality of key performance indicators (KPIs) from the type one network scheduler (600) and the type two network scheduler (700) are atleast one of periodic and event driven.
26. The method of clause 25, wherein the Non-RT-RIC (200) is configured to update a new DSS policy configuration message and transmit the new DSS policy configuration message to the Near-RT-RIC (300).
27. The method of any one of clauses 25 to 26, wherein the DSS policy configuration message comprises a resource allocation proportion between the type one network scheduler (600) and the type two network scheduler (700).
28. The method of any one of clauses 25 to 27, wherein the configuration parameters include report interval, one or more event triggers, moving average parameters or the like and the metrics includes buffer demand, arrival rate or the like.
29. The method of any one of clauses 25 to 28, wherein the plurality of report messages provides update on the radio resource parameters and the plurality of key performance indicators (KPIs) corresponds to key performance indicators of the type one network scheduler (600), the type two network scheduler (700) and the user equipment (800-1, 800-2) connected to at least one of the type one network scheduler (600) and the type two network scheduler (700).

## Claims

1. A method for providing dynamic allocation of radio resources in a wireless communication system (1000) comprising a radio access network (RAN) (500), the RAN (500) comprising a plurality of network nodes, the plurality of network nodes comprising a type one network scheduler (600) and a type two network scheduler (700), each of the plurality of network nodes are connected to at least one user equipment (UE) (800-1, 800-2), the method comprising:
receiving, by a first controller (300) from a second controller (200), a dynamic spectrums sharing (DSS) policy configuration message, wherein the DSS policy configuration message comprising a resource allocation proportion between the type one network scheduler (600) and the type two network scheduler (700);
receiving, by the first controller (300) from the type one network scheduler (600) and the type two network scheduler (700), a plurality of report messages and a plurality of key performance indicators (KPIs), wherein the plurality of report messages provides update on radio resource parameters, wherein the plurality of key performance indicators (KPIs) corresponds to key performance indicators of the type one network scheduler (600), the type two network scheduler (700) and the user equipment (800-1, 800-2) connected to at least one of the type one network scheduler (600) and the type two network scheduler (700); and
assigning, by the first controller (300) to the type one network scheduler (600) and the type two network scheduler (700), a plurality of physical resource blocks (PRBs) based on the DSS policy configuration message, the plurality of report messages and the plurality of KPIs;
wherein the plurality of report messages from the type one network scheduler (600) and the type two network scheduler (700) are atleast one of periodic and event driven,
wherein the plurality of key performance indicators (KPIs) from the type one network scheduler (600) and the type two network scheduler (700) are atleast one of periodic and event driven.

2. The method as claimed in claim 1, further comprising:
providing a weighted proportion for bandwidth allocation to the resource allocation proportion of the DSS policy configuration message for bandwidth allocation by the first controller (300) to the type one network scheduler (600) and the type two network scheduler (700), wherein the weighted proportion for bandwidth allocation is dynamically updated based on the plurality of report messages and the plurality of KPIs.

3. The method as claimed in claim 1 or claim 2, further comprising:
transmitting a policy feedback message to the second controller (200), wherein the policy feedback message includes feedback on the bandwidth allocation to the type one network scheduler (600) and the type two network scheduler (700) based on utilization of radio resources at the type one network scheduler and the type two network scheduler.

4. The method as claimed in any preceding claim, further comprising:
updating, by the second controller (200), the DSS policy configuration message at a first predefined time interval.

5. The method as claimed in any preceding claim, further comprising:
receiving, by the first controller (300), the plurality of report messages and the plurality of KPIs from the type one network scheduler (600) and the type two network scheduler (700) at a second predefined time interval.

6. The method as claimed in any preceding claim, wherein the wireless communication system (1000) is an open-radio access network (O-RAN) architecture system, wherein the O-RAN architecture system includes a plurality of components such as a non-real-time RAN intelligent controller, a near real time RAN intelligent controller, the plurality of network nodes, at least one interface, wherein the plurality of components is at least one of: disaggregated, reprogrammable and vendor independent,
wherein the near real-time RAN controller comprises vendor independent application programming interfaces (APIs).

7. The method as claimed in any preceding claim, wherein the wireless communication system (1000) is the O-RAN architecture system, wherein the O-RAN architecture system includes the plurality of components such as the non-real-time RAN intelligent controller, the near real time RAN intelligent controller, the plurality of network nodes, the at least one interface, wherein the plurality of components is at least one of: disaggregated, reprogrammable and vendor independent,
wherein the method is performed by the near real-time RAN controller.

8. The method as claimed in any preceding claim, wherein the radio resource assignment for the type one network scheduler (600) and the type two network scheduler (700) are orthogonal to each other.

9. The method as claimed in any preceding claim, wherein the plurality of report messages includes at least one of utilization status of radio resources at a plurality of cells corresponding to the type one network scheduler (600) and the type two network scheduler (700), load conditions related to current traffic of the UE (800-1, 800-2) at the type one network scheduler and the type two network scheduler, PRB buffer demand/size from the type one network scheduler and the type two network scheduler, PRB deficit at the type one network scheduler and the type two network scheduler, arrival rate, optional bitmap assignment proposal, and protected resource element (RE) pattern for physical resource blocks (PRBs) of the type one network scheduler and the type two network scheduler.

10. The method as claimed in any preceding claim, wherein the first controller (300) is the near-real-time RAN intelligent controller, the second controller (200) is the non-real-time RAN intelligent controller, the type one network scheduler (600) corresponds to a 4G (fourth generation) base station or evolved node base station and the type two network scheduler (700) corresponds to a 5G (fifth generation) base station.

11. The method as claimed in any preceding claim, wherein the assigning of the plurality of physical resource blocks (PRBs), by the first controller (300), between the type one network scheduler (600) and the type two network scheduler (700) is performed in real time.

12. The method as claimed in any preceding claim, wherein the wireless communication system (1000) includes at least one of: the O-RAN architecture system, a fifth generation communication system, a long term evolution (LTE) communication system, a Universal Mobile Telecommunications Service (UMTS) communication system and a GERAN/GSM (GSM EDGE Radio Access Network/ Global System for Mobile Communications) communication system.

13. A wireless communication system (1000) for providing dynamic allocation of radio resources, the wireless communication system (1000) comprising a radio access network (RAN) (500), the RAN (500) comprising a plurality of network nodes, the plurality of network nodes comprising a type one network scheduler (600) and a type two network scheduler (700), each of the plurality of network nodes are connected to at least one user equipment (UE) (800-1, 800-2), the wireless communication system (1000) comprising:
a first controller (300) and a second controller (200);
the first controller (300) configured to receive a dynamic spectrums sharing (DSS) policy configuration message from the second controller (200), wherein the DSS policy configuration message comprising a resource allocation proportion between the type one network scheduler (600) and the type two network scheduler (700);
the first controller (300) configured to receive a plurality of report messages and a plurality of key performance indicators (KPIs) from the type one network scheduler (600) and the type two network scheduler (700), wherein the plurality of report messages provides update on radio resource parameters, wherein the plurality of key performance indicators (KPIs) corresponds to key performance indicators of the type one scheduler (600), the type two scheduler (700) and the user equipment (800-1, 800-2) connected to at least one of the type one network scheduler (600) and the type two network scheduler (700); and
the first controller (300) configured to assign a plurality of physical resource blocks (PRBs) based on the DSS policy configuration message, the plurality of report messages and the plurality of KPIs to the type one network scheduler (600) and the type two network scheduler (700),
wherein the plurality of report messages from the type one network scheduler (600) and the type two network scheduler (700) are atleast one of periodic and event driven, wherein the plurality of key performance indicators (KPIs) from the type one network scheduler (600) and the type two network scheduler (700) are atleast one of periodic and event driven.

14. A method for providing dynamic allocation of radio resources in a wireless communication system (1000) comprising a type one network scheduler (600) and a type two network scheduler (700), the type one network scheduler (600) and the type two network scheduler (700) are connected to at least one user equipment (UE) (800-1, 800-2), the method comprising:
transmitting, by a non-real-time-radio access network intelligent controller (Non-RT-RIC) (200) to a near-real-time-radio access network intelligent controller (Near-RT-RIC) (300), a dynamic spectrum sharing (DSS) policy configuration message;
transmitting, by the Near-RT-RIC (300) to the type one network scheduler (600) and the type two network scheduler (700), configuration parameters and subscription to metrics; receiving, by the Near-RT-RIC (300) from the type one network scheduler (600) and the type two network scheduler (700), a plurality of report messages and a plurality of key performance indicators (KPIs), wherein the Near-RT-RIC (300) is configured to generate a traffic demand prediction, generate a resource allocation and encode a plurality of physical resource block (PRB) assignment using a bit vector;
assigning, by the Near-RT-RIC (300) to the type one network scheduler (600) and the type two network scheduler (700), the plurality of physical resource blocks based on the DSS policy configuration message, the plurality of report messages and the plurality of KPIs;
receiving, by the Near-RT-RIC (300), a feedback message from each of the type one network scheduler (600) and the type two network scheduler (700) and in response to the feedback message, transmitting a policy feedback message to the Non-RT-RIC (200); and
receiving, by a service management and orchestration (SMO) framework (100), the plurality of KPIs from each of the type one network scheduler (600) and the type two network scheduler (700), wherein the plurality of KPIs is further transmitted to the Non-RT-RIC (200) from the SMO framework (100),
wherein the plurality of report messages from the type one network scheduler (600) and the type two network scheduler (700) are atleast one of periodic and event driven,
wherein the plurality of key performance indicators (KPIs) from the type one network scheduler (600) and the type two network scheduler (700) are atleast one of periodic and event driven.

15. The method as claimed in claim 14, wherein the Non-RT-RIC (200) is configured to update a new DSS policy configuration message and transmit the new DSS policy configuration message to the Near-RT-RIC (300).

16. The method as claimed in claim 14 or 15, wherein the DSS policy configuration message comprises a resource allocation proportion between the type one network scheduler (600) and the type two network scheduler (700).

17. The method as claimed in any one of claims 14 to 16, wherein the configuration parameters include report interval, one or more event triggers, moving average parameters or the like and the metrics includes buffer demand, arrival rate or the like.

18. The method as claimed in any one of claims 14 to 17, wherein the plurality of report messages provides update on the radio resource parameters and the plurality of key performance indicators (KPIs) corresponds to key performance indicators of the type one network scheduler (600), the type two network scheduler (700) and the user equipment (800-1, 800-2) connected to at least one of the type one network scheduler (600) and the type two network scheduler (700).
